# EUROPÄISCHE PATENTSCHRIFT

(11) **EP 2 459 898 B1**
(45) Veröffentlichungstag und Bekanntmachung des Hinweises auf die Patenterteilung: **17.04.2013**
(21) Anmeldenummer: 10742722.1
(22) Anmeldetag: 21.07.2010
(51) Int. Cl.: F16D 69/04

(54) **BREMSBELAG FÜR EINE SCHEIBENBREMSE**
BRAKE PAD FOR A DISC BRAKE
GARNITURE DE FREIN POUR FREIN À DISQUE

(30) Priorität: 27.07.2009 DE 102009034858
(43) Veröffentlichungstag der Anmeldung: 06.06.2012
(73) Patentinhaber: KNORR-BREMSE Systeme für Nutzfahrzeuge GmbH, 80809 München (DE)
(72) Erfinder: GASSLBAUER, Franz, 84381 Johanniskirchen (DE)
(74) Vertreter: Mattusch, Gundula
(86) Internationale Anmeldenummer: PCT/EP2010/004456
(87) Internationale Veröffentlichungsnummer: WO 2011/012251

(56) Entgegenhaltungen:
- WO-A1-02/070916
- CA-A1- 2 300 401
- DE-A1-102006 004 550
- GB-A- 2 299 382

## Beschreibung

Die Erfindung betrifft einen Bremsbelag für eine Scheibenbremse nach dem Oberbegriff des Anspruchs 1, wie z.B. aus DE-A-10 2006 004 550 bekannt.

Scheibenbremsen für Fahrzeuge, insbesondere für Nutzfahrzeuge, umfassen neben einer Bremsscheibe auch zwei Bremsbeläge, die im Bedarfsfall, also bei einer Bremsung, gegen die Reibflächen einer Bremsscheibe pressbar sind.

Dabei besteht jeder Bremsbelag aus einer Belagträgerplatte und einem darauf befestigten Reibbelag, der in Gebrauchsstellung reibend an der zugeordneten Reibfläche der Bremsscheibe anliegt.

Der Verbindung des Reibbelages mit der Belagträgerplatte kommt eine besondere Bedeutung zu, da hohe Belastungen auftreten, die aus betriebsbedingten Stößen und einer beim Bremsen entstehenden Reibungswärme resultieren.

Um eine entsprechend feste Verbindung herzustellen, die neben der genannten Stoß- bzw. Wärmebelastung auftretende Biege- und Scherbeanspruchungen aufnehmen kann, ist es bekannt, an einen Grundkörper der Belagträgerplatte Formschlussmittel in Form von im Querschnitt runden oder eckigen oder noppenförmig ausgebildeten Erhebungen anzuformen, die von dem aufgebrachten Reibbelag umschlossen werden.

Im Überdeckungsbereich des Reibbelages, den Formschlussmitteln benachbart, also auf der dem Reibbelag zugewandten Seite des Grundkörpers der Belagträgerplatte ist bei einem gattungsgemäßen Bremsbelag eine Kennzeichnung vorgesehen, beispielsweise als sogenannte Sachnummer, über die vor dem Aufbringen des Reibbelages die Belagträgerplatte identifizierbar ist.

Diese Kennzeichnung in Form von Zeichen, wie Buchstaben oder dergleichen, und/oder Ziffern ist als Vertiefung in die Belagträgerplatte eingegossen.

In diesem Bereich besteht in soweit keine formschlüssige Verbindung zwischen dem Reibbelag und der Belagträgerplatte, vergleichbar der Verbindung mit den Formschlussmitteln.

Zur Anbindung des Reibbelages an der Belagträgerplatte auch in dem durch die Kennzeichnung definierten Bereich wird eine Klebverbindung geschaffen, die jedoch nicht in dem Maße belastbar ist, wie eine Formschlussverbindung.

Insbesondere durch die beim Bremsen entstehende Reibungswärme wird die Haftfähigkeit der Klebeverbindung reduziert, so dass es dauerhaft zu einem Ablösen des Reibbelages kommen kann, mit einer entsprechend höheren Belastung der Formschlussmittel bzw. der Formschlussverbindungen.

Naturgemäß ist damit eine Optimierung der Standzeit eines solchen Bremsbelages nicht möglich.

Der Erfindung liegt die Aufgabe zugrunde, einen Bremsbelag der gattungsgemäßen Art so weiterzuentwickeln, dass mit geringem konstruktivem und fertigungstechnischen Aufwand eine bessere Verbindung zwischen dem Reibbelag und der Belagträgerplatte erreicht und in der Folge die Standzeit des Bremsbelages verbessert wird.

Diese Aufgabe wird durch einen Bremsbelag mit den Merkmalen des Anspruchs 1 gelöst.

Durch die erhabene Ausbildung der Zeichen und/oder Ziffern wird eine wesentlich bessere, d.h., festere Verbindung des Reibbelages an der Belagträgerplatte erreicht, wobei sich dies nicht nur auf den von der Kennzeichnung definierten Bereich bezieht sondern durch die verminderte Belastung der übrigen Formschlussmittel auf die sozusagen Gesamtverbindung.

Eine insbesondere durch Wärmeinwirkung reduzierte partielle Haftminderung ist praktisch ausgeschlossen, wodurch sich eine Verbesserung der Standzeit ergibt, mit den daraus resultierenden Kostenvorteilen.

Bevorzugt sind die Zeichen und/oder Ziffern der Kennzeichnung in ihrer erhabenen Höhe gleich der Höhe der Formschlussmittel, so dass sich das Reibmaterial in gleichem Maße an den Formschlussmitteln wie auch an der Kennzeichnung abstützen kann, womit eine gleichmäßige Anbindung des Reibbelages über die gesamte Belagträgerplatte erreicht wird.

Im Übrigen kann die Profilierung der einzelnen Zeichen und/oder Ziffern unterschiedlich gewählt sein, d.h., beispielsweise mit Hinterschneidungen, mit Vertiefungen im Anbindungsbereich an den Grundkörper oder durch schräge oder senkrechte Ausrichtung der Begrenzungswände, wobei die Charakteristik der Kennzeichnung, d.h., deren Identifikationsvermögen nicht beeinträchtigt wird.

Als besonderer Vorteil ist überdies hervorzuheben, dass diese Verbesserung des Bremsbelages quasi kostenneutral realisierbar ist.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:

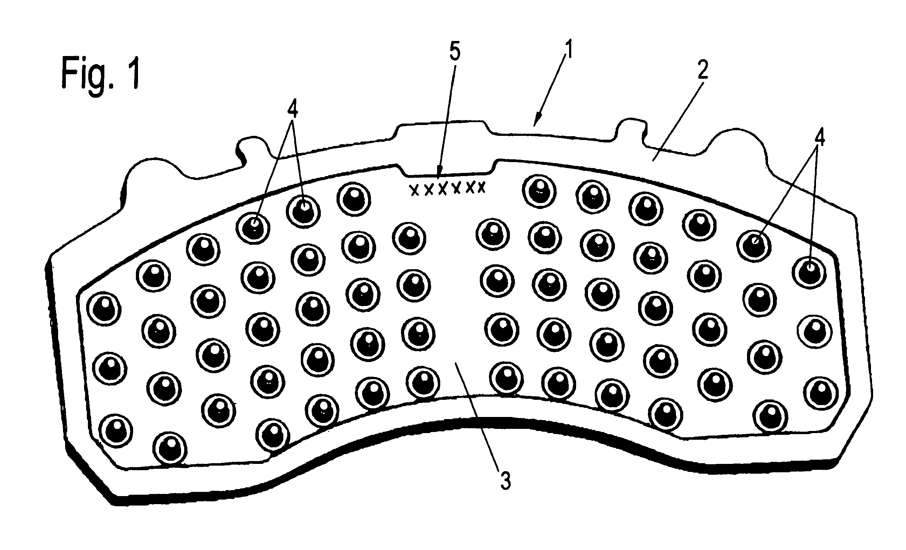

- Figur 1: eine Belagträgerplatte eines erfindungsgemäßen Bremsbelages in einer perspektivischen Draufsicht
- Figur 2: einen vergrößerten Teilausschnitt der Belagträgeiplatte nach Figur 1.

In den Figuren ist eine Belagträgerplatte 1 dargestellt, die Bestandteil eines Bremsbelages ist, der überdies einen nicht gezeigten Reibbelag aufweist, der unter Kontaktierung von Formschlussmitteln 4 fest mit der Belagträgerplatte 1 verbunden ist.

Die Formschlussmittel 4 der aus einem Gussmaterial bestehenden Belagträgerplatte 1 sind an einen flächenförmigen Grundkörper 2 innerhalb eines Überdeckungsbereiches 3 des Reibbelages angegossen und im Ausfiihrungsbeispiel als im Querschnitt runde, erhabene Zapfen ausgebildet. Im gezeigten Beispiel sind die Formschlussmittel 4, entsprechend dem Konturenverlauf der Grundplatte 2 in parallelen, kreisbogenförmig ausgerichteten Reihen nebeneinander liegend angeordnet.

In dem Überdeckungsbereich 3, vorliegend im oberen Randbereich, etwa mittig angeordnet, ist eine Kennzeichnung 5 vorgesehen, bestehend aus Zeichen 6 und Ziffern 7, die hier lediglich beispielhaft aufgeführt sind.

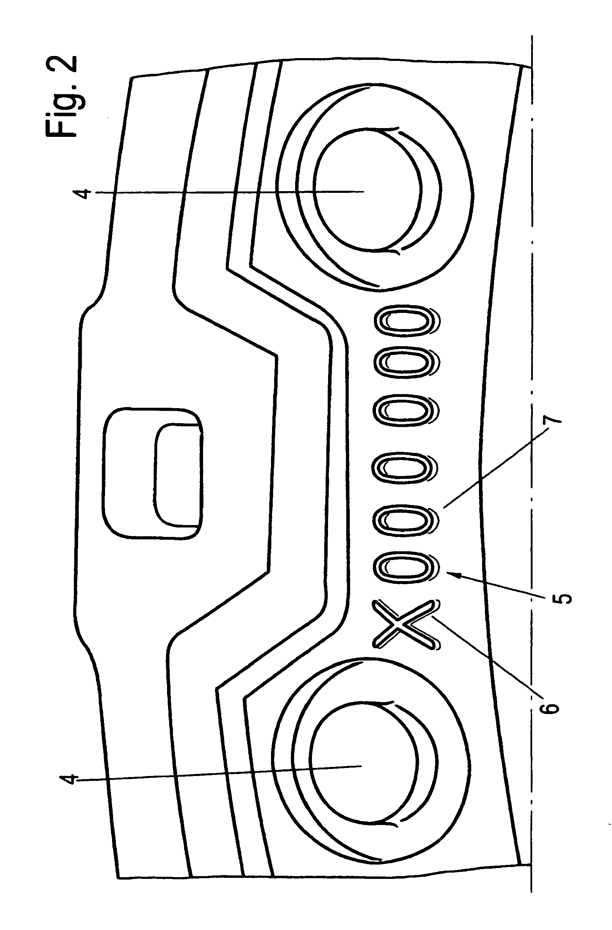

Wie insbesondere die Figur 2 sehr deutlich zeigt, sind die Zeichen 6 und Ziffern 7 erhaben ausgebildet und ebenso wie die Formschlussmittel 4 angegossen.

Bevorzugt ist die Höhe der Zeichen 6 und Ziffern 7 gleich der Höhe der Formschlussmittel 4.

## Patentansprüche

1. Bremsbelag für eine Scheibenbremse, insbesondere eines Fahrzeuges, mit einer als Gussteil ausgebildeten Belagträgerplatte (1), die erhabene, angeformte, von einem Reibbelag zu dessen Halterung umschlossene Formschlussteile (4) sowie diesen benachbarte eine vom Reibbelag überdeckte Kennzeichnung (5) in Form einer Reihe von Zeichen (6) und/oder Ziffern (7) aufweist, **dadurch gekennzeichnet, dass** die Zeichen (6) und/oder Ziffern (7) erhaben ausgebildet sind.

2. Bremsbelag nach Anspruch 1, **dadurch gekennzeichnet, dass** die Zeichen (6) und/oder Ziffern (7) angegossen sind.

3. Bremsbelag nach Anspruch 1 oder 2, **dadurch gekennzeichnet, dass** die Höhe der Zeichen (6) und/oder Ziffern (7) der Höhe der Formschlussteile (4) entspricht.

4. Bremsbelag nach einem der vorhergehenden Ansprüche, **dadurch gekennzeichnet, dass** der Fuß der erhabenen Zeichen (6) und/oder Ziffern (7) in eine gegenüber der Belagträgerplatte (1) abgesetzte Vertiefung mündet.

5. Bremsbelag nach einem der vorhergehenden Ansprüche, **dadurch gekennzeichnet, dass** die Begrenzungswände der erhabenen Zeichen (6) und/oder Ziffern (7) senkrecht zur Belagträgerplatte (1) oder schräg verlaufend angeordnet sind.

## Claims

1. Brake lining for a disc brake, in particular in a vehicle, comprising a lining backing plate (1) designed as casting, which presents raised, integrally moulded form-locking elements (4) enclosed by a friction coating for holding it, as well as an identification (5) in the form of a number of characters (6) and/or figures (7) adjacent thereto, which is covered by said friction coating, **characterised in that** said characters (6) and/or figures (7) have a raised configuration.

2. Brake lining according to Claim 1, **characterized in that** said characters (6) and/or figures (7) are cast in one piece.

3. Brake lining according to Claim 1 or 2, **characterized in that** the height of said characters (6) and/or figures (7) corresponds to the height of said form-locking elements (4).

4. Brake lining according to any of the preceding Claims, **characterized in that** the bottom of said raised characters (6) and/or figures (7) opens into a recess offset from said lining backing plate (1).

5. Brake lining according to any of the preceding Claims, **characterized in that** the defining walls of said raised characters (6) and/or figures (7) are disposed orthogonally on said lining backing plate (1) or extend at an inclination.

## Revendications

1. Garniture de frein pour un frein à disque, en particulier d'un véhicule, comprenant une plaque de support de garniture (1) conçue sous forme d'une pièce de fonte, qui présente des éléments de connexion mécanique en relief, y formés intégralement et entourés par une garniture de friction pour la fixation de la dernière, ainsi qu'une identification (5) sous forme d'un nombre de caractères (6) et/ou chiffres (7) en relief y contigües, qui est recouverte par ladite garniture de friction, **caractérisée en ce que** lesdits caractères (6) et/ou chiffres (7) en relief présentent une configuration en relief.

2. Garniture de frein selon la revendication 1, **caractérisée en ce que** lesdits caractères (6) et/ou chiffres (7) en relief sont fondus en une seule pièce.

3. Garniture de frein selon la revendication 1 ou 2, **caractérisée en ce que** l'hauteur desdits caractères (6) et/ou chiffres (7) en relief correspond à l'hauteur desdits éléments de connexion mécanique (4).

4. Garniture de frein selon une quelconque des revendications précédentes, **caractérisée en ce que** la semelle desdits caractères (6) et/ou chiffres (7) en relief s'ouvre dans un évidement mis en déport relativement à ladite plaque de support de garniture (1).

5. Garniture de frein selon une quelconque des revendications précédentes, **caractérisée en ce que** les parois de limitation desdits caractères (6) et/ou chiffres (7) en relief sont disposes en position orthogonale sur ladite plaque de support de garniture (1) ou s'étendent à une inclinaison.
